# EUROPEAN PATENT APPLICATION

(11) **EP 3 690 269 A1**
(43) Date of publication of application: **05.08.2020**
(21) Application number: 19154597.9
(22) Date of filing: 30.01.2019
(51) Int. Cl.: F16C 33/66, F03D 80/70

(54) **BEARING FOR A WIND TURBINE AND WIND TURBINE**

(71) Applicant: Siemens Gamesa Renewable Energy A/S, 7330 Brande (DK)
(72) Inventor: Rychahivskyy, Andriy, 7400 Herning (DK)
(74) Representative: Aspacher, Karl-Georg

(57) **Abstract**

A bearing (9, 9') for a wind turbine (1), the bearing being configured to support a shaft (8) of the wind turbine (1) rotatably around a shaft axis (A), comprising:
several rollers (17, 17', 17") each having a rotation axis (19),
an inner race (16, 16') and an outer race (15, 15'), the rollers (17, 17', 17") being configured to run along running surfaces (20, 21) of both the inner and outer races (16, 16', 15, 15') during rotation of the shaft (8) around the shaft axis (A) such that each roller (17, 17', 17") rotates around its rotation axis (19), and
a lubricant (31), wherein:
at least one of the rollers (17, 17', 17") comprises at least one through-hole (18, 18', 18") extending along an axis (B) from a first side (23) of the roller (17, 17', 17") to a second side (24) of the roller (17, 17', 17") for guiding the lubricant (31) from the first side (23) to the second side (24), and
the axis (B) of the at least one through-hole (18, 18', 18") is inclined relative to the rotation axis (19) of the at least one roller (17, 17', 17").

By having the at least one through-hole extending from the first side of the roller to the second side of the roller, the lubricant can be better transported from the first side to the second side.

## Description

The present invention relates to a bearing for a wind turbine and a wind turbine.

In wind turbines, bearings are used to support the main shaft connecting the rotor to the gear box and/or the generator. A proper lubrication of the bearings is essential to ensure a long lifetime of the bearings and to prevent premature failure. In particular, contact faces of roller elements and races of the bearings require a proper lubrication. However, as the main shaft is subjected to substantial loads from the rotor blades during the operation of the wind turbine, the lubrication of the contact faces of conventional bearings are often not sufficient. Furthermore, a standstill of the wind turbine can cause the lubrication film on the contact faces of the bearing to break.

It is one object of the present invention to provide an improved bearing for a wind turbine and an improved wind turbine.

Accordingly, a bearing for a wind turbine is provided. The bearing is configured to support a shaft of the wind turbine rotatably around a shaft axis. The bearing comprises several rollers each having a rotation axis. Further, the bearing comprises an inner race and an outer race. The rollers are configured to run along running surfaces of both the inner and outer races during rotation of the shaft around the shaft axis such that each roller rotates around its rotation axis. The bearing comprises a lubricant. At least one of the rollers comprises at least one through-hole extending along an axis from a first side of the roller to a second side of the roller for guiding the lubricant from the first side to the second side. The axis of the at least one through-hole is inclined relative to the rotation axis of the at least one roller.

By having the at least one through-hole extending from the first side of the roller to the second side of the roller, the lubricant can be better transported from the first side to the second side. In particular, the lubricant can not only be transported from the first side to the second side along contact surfaces of the rollers with the inner and outer races but also through the through-hole. Hence, the through-hole provides an unhindered transport of the lubricant from the first side to the second side. Thus, the second side of the roller can be better lubricated. In particular, contact faces of the second side of the roller and the running surface of the inner and/or outer race can be better lubricated.

Having the through-hole inclined relative to the rotation axis of the roller, the lubricant can be moved from the first side through the trough hole to the second side due to the centrifugal force caused by the rotation of the roller around its rotation axis.

Having the at least one through-hole allows to supply the lubricant only at the first side of the roller because it is reliably transported to the second side of the roller. In particular, an extra supply of lubricant to the second side of the roller can be omitted.

The bearing is part of a wind turbine. A wind turbine is an apparatus to convert the wind's kinetic energy into electrical energy. The wind turbine comprises, for example, a rotor having one or more blades, with each of the blades being connected to a hub of the wind turbine. A shaft connects the hub to a generator arranged inside a nacelle. The shaft is supported inside the nacelle by the bearing. The wind turbine further comprises a tower holding, at its top end, the nacelle. The tower of the wind turbine may be connected via a transition piece to a foundation of the wind turbine, such as a monopile in the seabed.

The bearing is, in particular, supported by a bearing housing.
The bearing housing, the generator and further components of the nacelle are, for example, each mounted to a bed frame of the wind turbine. The bed frame is, for example, a floor of the nacelle or a portion of the floor of the nacelle. The bed frame is connected to the tower of the wind turbine to transmit loads received, for example from the bearing housings, to the tower. The bed frame may be connected to the tower of the wind turbine by means of a yaw bearing to orient the rotor into the wind.

The shaft is, for example, configured to directly connect the rotor with the generator. In such a preferred embodiment, the wind turbine is a direct drive wind turbine. Direct drive wind turbines have one or two main bearings that transfer all loads (i.e. radial, axial and bending moments) from the rotor. In direct drive wind turbines, the rotor is connected directly to the generator - no gearbox is provided between the rotor and generator.

Alternatively, the shaft is configured to connect the rotor with the generator by directly connecting the rotor with a coupling of a gear box and by connecting the gear box with the generator by means of a further shaft.

The bearing is, in particular, a (first) main bearing of the wind turbine supporting the main shaft. The wind turbine may comprise a second main bearing supporting the main shaft. The second main bearing may also comprise at least one roller with at least one through-hole similar to the through-hole of the first main bearing. In wind turbines with a gear box, the one or two main bearings are supporting the main shaft, in particular, outside the gear box/gear box housing of the wind turbine. In such an embodiment, the gear box and/or the gear box housing may be supported by two torque arms that are connected to the bed frame.

The axis of each roller may be inclined relative to the axis of the shaft.

The outer race of the bearing is, in particular, supported by the bearing housing. The inner race is, in particular, fixed to the shaft. The rollers are arranged, in particular, rotatably between the inner and outer races. During the operation of the wind turbine, the rotation of the shaft causes each roller to rotate around its rotation axis. Thus, the rotating rollers run along the running surfaces of both the inner and outer races during the operation of the wind turbine.

The running surfaces of the inner and outer races are, in particular, all surfaces of the inner and outer races that are in contact with surfaces of the rollers.

The lubricant is, for example, provided exclusively at the first side of each roller.

The wind turbine comprises, for example, a lubricant supply system supplying the lubricant to the rollers. The lubricant supply system comprises, for example, a pump, a level indicator, a control device, one or more supply lines, and/or one or more injection ports. The lubricant is, for example, injected through the injection ports to the first side of the rollers. The lubricant can then be pressed into the at least one trough hole due to the limited free volume of the bearing.

The wind turbine comprises, for example, a lubricant drain system. The lubricant drain system comprises, for example, a lubricant tank, a pump, a filter, one or more drain holes and/or one or more drain lines. The one or more drain lines drain, for example, lubricant from the second side and/or a second end face of the rollers. The lubricant drain system may be connected to the lubricant supply system to re-supply the drained and filtered lubricant to the rollers.

According to an embodiment, the at least one through-hole is arranged exclusively on one side of the rotation axis when seen in a cross-section of the roller along its rotation axis.

By having the at least one through-hole arranged exclusively on one side of the rotation axis, the centrifugal force acts on the lubricant in the through-hole along the entire through-hole only in one direction, i.e. the direction pointing away from the rotation axis and being perpendicular to the rotation axis. Thus, the lubricant is better moved along the through-hole to the second side of the roller.

According to a further embodiment, each roller has a geometry comprising a first end face and a second end face, and a shell surface connecting the first and second end faces and being configured for running along the running surfaces of the inner and outer races. The first side is the first end face. The second side is the second end face, the shell surface and/or an edge between the second end face and the shell surface.

Preferably, the second side is the edge between the second end face and the shell surface.

In addition to the shell surface also parts of the first end face and/or of the second end face of the rollers can be configured for running along the running surfaces of the inner and outer races.

By the second side being the second end face, the at least one trough hole allows a better and direct lubrication of the second end face. This is particularly advantageous in the case that the second end face is partly in contact with the running surface and that the through-hole ends at that part of the second end face being in contact with the running surface. For example, in the case of a taper roller bearing, this allows a better lubrication of the roller large end face and the inner rim of the guiding recess of the inner race.

By the second side being the shell surface, the at least one trough hole allows a better and direct lubrication of the shell surface running along the running surface of the inner and outer races.

By the second side being the edge between the second end face and the shell surface, the at least one through-hole allows a better lubrication of the edge region of the second end face of the roller. This is particularly advantageous in the case that the edge region of the roller is in contact with the running surface.

According to a further embodiment, the at least one through hole comprises two or more through-holes arranged symmetrically with respect to the rotation axis of the roller.

By having two or more symmetrically arranged through-holes, the lubricant can be transported uniformly to the second side and lubricate the second side uniformly, while keeping a symmetric shape of each roller. The symmetric shape of the rollers provides a better stability of the roller and, thus, also of the bearing.

According to a further embodiment, the two or more through-holes start at a common opening on the first side of the roller.

Having the common opening of the two or more through-holes on the first side allows to distribute the lubricant entering the common opening evenly into the two or more through-holes. Thus, a uniform lubrication of the second side is provided. Further, by having the common opening, the opening on the first side can be kept small providing stability of the roller.

Alternatively, each of the two or more through-holes may start at a separate opening on the first side of the roller.

According to a further embodiment, the two or more through-holes comprise an even number of through-holes. Each of two through-holes of the even number of through-holes are arranged in a V-shape when seen in a cross-section of the at least one roller along its rotation axis.

Having the V-shape allows a uniform transportation of the lubricant to the second side and a symmetric configuration of each roller.

According to a further embodiment, the at least one through-hole ends at the running surface of the inner race and/or of the outer race.

Thus, the lubricant is guided on a direct path to the running surface of the inner race and/or the outer race. Hence, the running surface of the inner race and/or the outer race can be directly lubricated.

According to a further embodiment, the inner and/or outer race comprises a recess having the running surface. The rollers are partially accommodated in the recess such that each roller runs with its shell surface and partially with its first end face and/or second end face within the recess along the running surface of the inner and/or outer race.

Having the recess of the inner race accommodating the rollers allows a better guiding of the rollers. Having the at least one through-hole of the at least one roller allows to directly lubricate the inner rim of the recess.

According to a further embodiment, the recess of the inner race comprises a circumferential indentation, notch, pocket and/or groove in fluid connection with the at least one through-hole for receiving the lubricant.

The circumferential indentation is, in particular, in fluid connection with the at least one through-hole at the second side of the roller. Having the circumferential indentation in fluid connection with the at least one through-hole allows to transport the lubricant from the first side of the roller to the circumferential indentation of the inner race from where it can lubricate the second side and/or the second end face of the roller.

According to a further embodiment, a diameter of the at least one through-hole is smaller than half of the diameter of the roller, preferably smaller than a quarter of the diameter of the roller, even more preferably smaller than a tenth of the diameter of the roller.

Having the diameter of the at least one through-hole being significantly smaller than half of the diameter of the roller allows to ensure the solidity of each roller.

According to a further embodiment, the roller is a tapered roller.

The tapered roller has, in particular, a truncated cone shape. In particular, the first and second end faces of the tapered roller have both a circular shape and an area of the first end face is smaller than an area of the second end face.

Using a taper roller bearing in combination with the at least one through-hole of the at least one roller allows to advantageously lubricate the second end face of the tapered roller which is partly in contact with the inner race.

According to a further embodiment, the roller is a cylindrical or toroidal roller.

In particular, the first and second end faces of the cylindrical or toroidal roller have both a circular shape and the same area.

According to a further embodiment, the bearing comprises at least two rows of rollers.

According to a further embodiment, the lubricant comprises grease and/or oil.

Grease comprises, in particular, a mixture of oil and soap. The lubricant comprises, for example, very soft and/or semi-fluid grease. The lubricant comprises, for example, grease with an NLGI (National Lubricating Grease Institute) number of 0 (very soft) or 00 (semi-fluid). However, the lubricant may, for example, also comprise grease with another NLGI number.

According to a further aspect, a wind turbine is provided. The wind turbine comprises at least one bearing as described above.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a perspective view of a wind turbine according to an embodiment;
- Fig. 2: shows a cross-section view of a main shaft of the wind turbine of Fig. 1, the main shaft being supported by a bearing according to an embodiment;
- Fig. 3: shows a partial view, in cross-section, of a bearing according to a further embodiment;
- Fig. 4: shows a cross-section view of a roller of the bearing of Fig. 3;
- Fig. 5: shows a view of the roller of Fig. 4 as seen from the right-hand side;
- Fig. 6: shows a cross-section view of a roller of a bearing according to a further embodiment; and
- Fig. 7: shows a partial view, in cross-section, of the bearing of Fig. 3.

In the Figures, like reference numerals designate like or functionally equivalent elements, unless otherwise indicated.

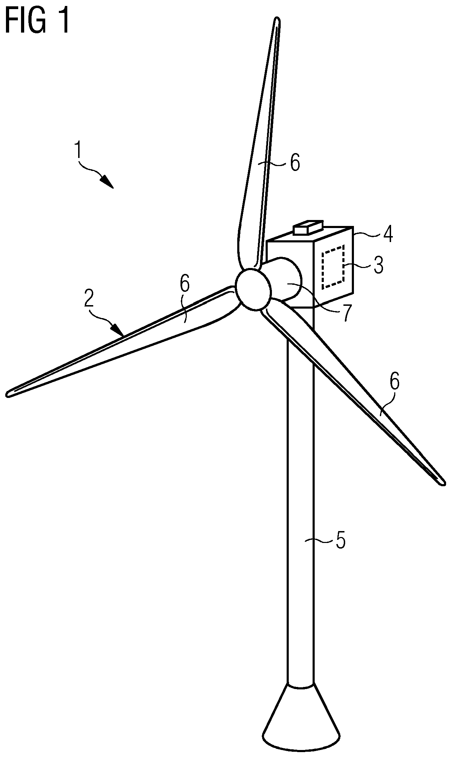

Fig. 1 shows a wind turbine 1 according to an embodiment.

The wind turbine 1 comprises a rotor 2 connected to a generator 3 arranged inside a nacelle 4. The nacelle 4 is arranged at the upper end of a tower 5 of the wind turbine 1.

The rotor 2 comprises, for example, three rotor blades 6. The rotor blades 6 are connected to a hub 7 of the wind turbine 1. Rotors 2 of this kind may have diameters ranging from, for example, 50 to 160 meters or even more. The rotor blades 6 are subjected to high wind loads. Accordingly, high loads act on a main shaft (not shown in Fig. 1) connecting the hub 7 to the generator 3.

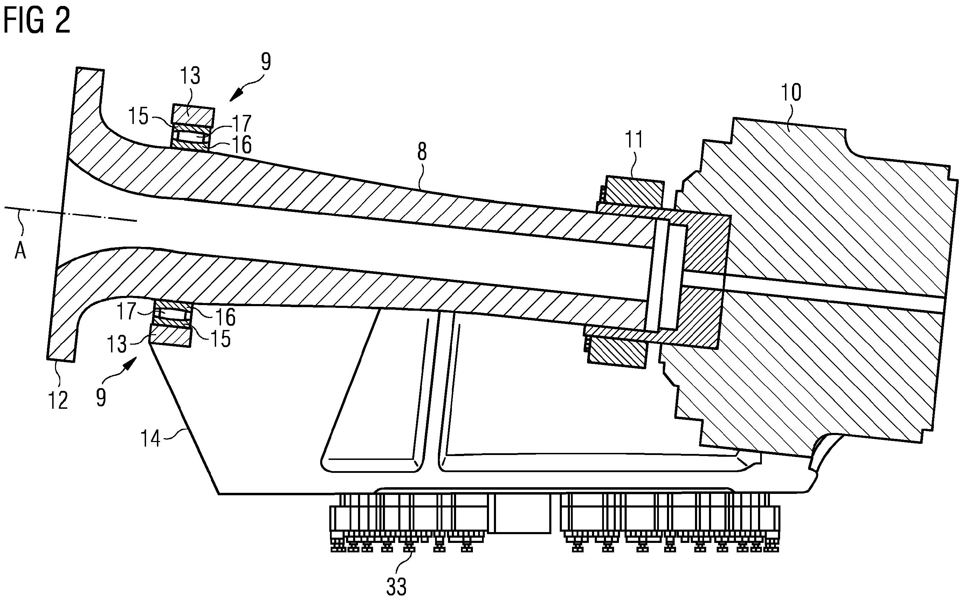

Fig. 2 shows a cross-section view of a main shaft 8 of the wind turbine 1 of Fig. 1. The main shaft 8 is supported by a bearing 9.

The main shaft 8 connects the hub 7 (Fig. 1) to a coupling 11 (Fig. 2). The coupling 11 may be a shrink disc coupling. The coupling 11 connects the main shaft 8 to a gearbox 10. The gearbox 10 is connected to the generator 3 (Fig. 1). A shaft axis of the main shaft 8 is denoted by reference numeral A. Although not shown in the figures, the wind turbine 1 may also be a direct drive wind turbine without a gear box 10. In such a direct driven wind turbine the shaft 8 would be directly coupled to the generator 3.

The main shaft 8 may be configured as a hollow shaft and may comprise a flange 12 for connecting to the hub 7.

The wind turbine 1 comprises the bearing 9 supporting the main shaft 8 rotatably around the shaft axis A. The bearing 9 comprises a bearing housing 13. The bearing housing 13 is bolted to a bed frame 14 to transmit loads from the shaft 8 to the bed frame 14. The bearing 9 is, in particular, located outside the gear box 10 and upwind thereof. In the alternative direct driven wind turbine without a gear box 10, the bearing 9 would be arranged upwind of the generator 3.

The bed frame 14 is connected at a lower part 33 thereof to a yaw bearing (not shown) which in turn is connected to the tower 5. By having the yaw bearing, the bed frame 14 is thus able to yaw around a yaw axis which substantially corresponds to the vertical axis of the tower 5 (Fig. 1).

The bearing housing 13 supports an outer race 15 of the bearing 9. An inner race 16 of the bearing 9 is fixed to the main shaft 8. Rollers between the outer and inner races 15, 16 are denoted by reference numeral 17 in Fig. 2.

Although not shown in the figures, the wind turbine 1 may comprise a second main bearing supporting the main shaft 8. The second main bearing may be arranged between the bearing 9 and the coupling 11 and, in particular, outside the gear box 10. There may be some additional bearings (not shown) integrated into the gear box 10. The gear box 10 and/or the gear box housing may be supported by two torque arms (not shown) that are connected to the bed frame 14. In the alternative direct driven wind turbine without a gear box 10, the second bearing would be arranged between the first bearing 9 and the generator 3.

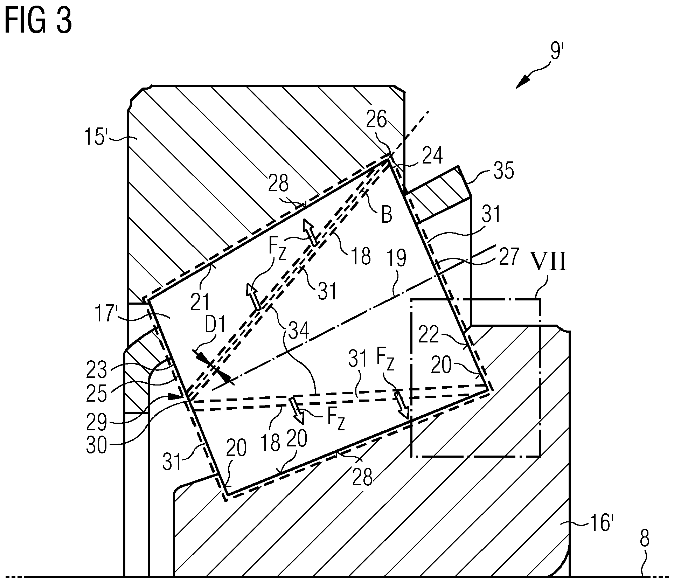

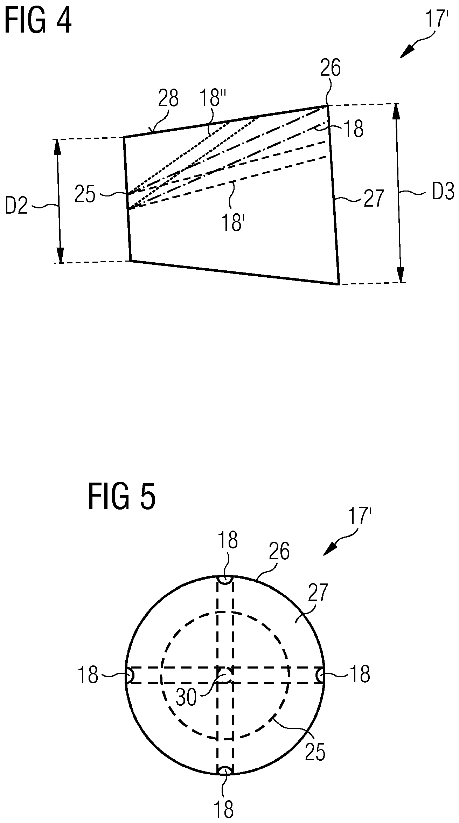

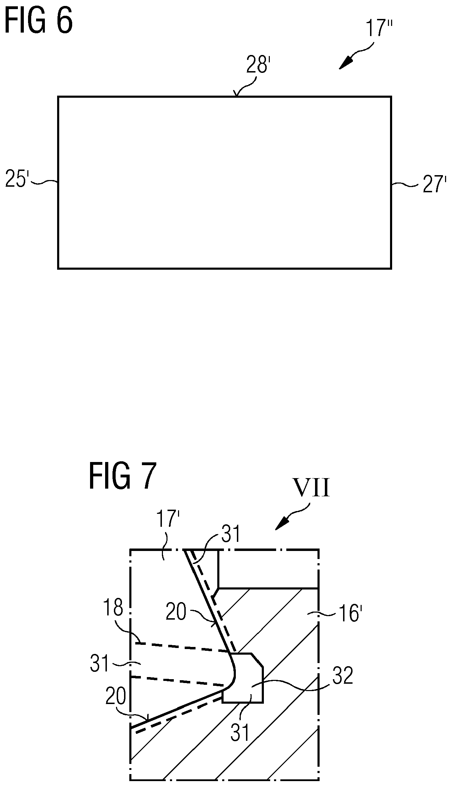

The rollers 17 of the bearing 9 may be toroidal rollers 17 as shown in Fig. 2. In another embodiment, the bearing 9' may be a taper roller bearing comprising tapered rollers 17' as shown in Figs. 3 and 4. In another embodiment, the rollers of a bearing 9" may be cylindrical rollers 17" as shown in Fig. 6.

A proper lubrication of the bearings 9, 9', 9" is essential for a long lifetime of the bearings. In order to improve the lubrication of the rollers 17, 17', 17" at the contact faces with the inner and outer races 15, 15', 16, 16' at least one through-hole 18 extending through the interior of at least one of the rollers 17, 17', 17" is provided.

In the following, the through-hole 18 is described with reference to Figs. 3 to 7. Although these figures show mainly a tapered roller 17', the described through-hole 18 can also be applied to a roller 17, 17" having another shape.

Fig. 3 shows a partial cross-section view of the tapered roller bearing 9'. The bearing 9' supports the main shaft 8 of the wind turbine 1 of Fig. 1. The bearing 9' is, for example, arranged similar as the bearing 9 in Fig. 2.

The bearing 9' comprises several tapered rollers 17' held rotatably inside a cage 35. At least one of the tapered rollers 17' comprises the at least one through-hole 18. Fig. 3 shows as an example one of the rollers 17' having the at least one through-hole 18 in cross-section along with portions of the inner race 16' and the outer race 15' of the bearing 9'.

During operation of the wind turbine 1 the main shaft 8 rotates around the shaft axis A (Fig. 2). The inner race 16' being fixed to the shaft 8 rotates with the shaft 8. This causes the rollers 17' to rotate each around its rotation axis 19 (Fig. 3). The rotating rollers 17' run along a running surface 20 of the inner race 16' and along a running surface 21 of the outer race 15'.

The inner race 16' comprises a recess 22 partially accommodating the rollers 17' such that the rollers 17' run within the recess 22. In particular, the inner recess 16' comprises the running surface 20.

High friction can occur at the contact faces between the running surfaces 20, 21 of the inner and outer races 16', 15' and the surface of the roller 17', for example due to high wind loads acting on the rotor 2 of the wind turbine 1. Therefore, these contact faces need to be lubricated sufficiently.

To provide a good lubrication at all contact faces of the bearing 9', the at least one roller 17' shown in Fig. 3 comprises, as an example, four through-holes 18. In the cross-section view of Fig. 3, only two of the four through-holes 18 are visible. Each of two through-holes 18 of the four through-holes 18 are arranged in a V-shape 34 when seen in the cross-section view of Fig. 3.

Further, each of the trough holes 18 extends from a first side 23 of the roller 17' to a second side 24 of the roller 17'.

The first side 23 in the example of the tapered roller 17' of Fig. 3 is a first end face 25 of the truncated cone shaped roller 17'. The second side 24 in this preferred embodiment of the tapered roller 17' is an edge 26 between a second end face 27 and a shell surface 28 of the truncated cone shaped roller 17'. The shell surface 28 is connecting the first and second end faces 25, 27 with each other.

A diameter D1 of each of the four through-holes 18 is significantly smaller than half of the diameter D2, D3 (Fig. 4) of the roller 17'. Here, D2 denotes the smallest diameter of the tapered roller 17' and D3 denotes the largest diameter of the tapered roller 17'. In particular, the diameter D1 of each of the four through-holes 18 is significantly smaller than half of the smallest diameter D2 of the roller 17'.

In the preferred embodiment, the second side 24 of the tapered roller 17' is the edge 26 between the second end face 27 and the shell surface 28 of the roller 17', as described above. Alternatively, as shown in Fig. 4, in another example, the second side 24 is the second end face 27 such that the trough hole 18' extends from the first end face 25 to the second end face 27 of the tapered roller 17'. In yet another example, the second side 24 is the shell surface 28 such that the trough hole 18" extends from the first end face 25 to the shell surface 28 of the tapered roller 17'.

Coming back to the example of Fig. 3 where four through-holes 18 extend from the first end face 25 to the edge 26 between the second end face 27 and the shell surface 28. The four through-holes 18 start, in particular, at a center portion 29 of the first end face 25. In particular, the four through-holes 18 start at a common opening 30 on the first end face 25, as shown in Figs. 3 and 5. Fig. 5 shows a view of the second end face 27 of the roller 17'. Further, the four through-holes 18 end at four different, symmetrically arranged locations at the edge 26, as shown in Fig. 5.

During operation of the wind turbine 1 a lubricant 31, e.g. semi-fluid grease, supplied, for example, to the first end face 25 of the roller 17' flows through each of the through-holes 18 to the edge 26. In particular, the lubricant 31 flows from the first end face 25 to the edge 26 due to a centrifugal force F_{Z} generated during rotation of the roller 17' as it runs along the inner and outer races 16', 15' and rotates around its rotation axis 19.

In particular, an axis B of each of the four through-holes 18 is inclined relative to the rotation axis 19 of the roller 17'. In particular, each of the four through-holes 18 is arranged exclusively on one side of the rotation axis 19 of the roller 17' when seen in a cross-section of the roller 17' along its rotation axis 19.

Thus, the centrifugal force F_{Z} acts on the lubricant 31 in the through-holes 18 along the entire through-hole 18 only in one direction, i.e. the direction perpendicular to the rotation axis 19 and pointing away from the rotation axis 19. Thus, along the entire through-hole 18 the centrifugal force F_{Z} acts on the lubricant 31 to move it further along the through-hole 18 in the direction of the edge 26. In this manner the lubricant 31 is delivered through the through-holes 18 to the edge 26. The lubricant 31 delivered through the through-holes 8 promotes the formation of a lubricant film at the contact faces of the roller 17' and the races 15', 16'. In particular, a lubricant film can be provided at the contact faces of the second end face 27 and the rim of the recess 22 of the tapered roller 17'. Thus, friction, wear and standstill marks at the contact faces, in particular of the second end face 27 of the roller 17' and the inner race 16', can be reduced.

The recess 22 of the inner race 16' may comprise a circumferential indentation 32 in fluid connection with one or more of the through-holes 18 for receiving the lubricant 31. The circumferential indentation 32 is configured in this example as a groove. This is illustrated in Fig. 7 which shows an enlarged portion VII of Fig. 3. In this manner, a lubricant reservoir can be provided at the second end face of the roller 17'.

Although the present invention has been described in accordance with preferred embodiments, it is obvious for the person skilled in the art that modifications are possible in all embodiments.

## Claims

1. A bearing (9, 9') for a wind turbine (1), the bearing being configured to support a shaft (8) of the wind turbine (1) rotatably around a shaft axis (A), comprising:
several rollers (17, 17', 17") each having a rotation axis (19),
an inner race (16, 16') and an outer race (15, 15'), the rollers (17, 17', 17") being configured to run along running surfaces (20, 21) of both the inner and outer races (16, 16', 15, 15') during rotation of the shaft (8) around the shaft axis (A) such that each roller (17, 17', 17") rotates around its rotation axis (19), and
a lubricant (31), wherein:
at least one of the rollers (17, 17', 17") comprises at least one through-hole (18, 18', 18") extending along an axis (B) from a first side (23) of the roller (17, 17', 17") to a second side (24) of the roller (17, 17', 17") for guiding the lubricant (31) from the first side (23) to the second side (24), and
the axis (B) of the at least one through-hole (18, 18', 18") is inclined relative to the rotation axis (19) of the at least one roller (17, 17', 17").

2. The bearing according to claim 1, wherein the at least one through-hole (18, 18', 18") is arranged exclusively on one side of the rotation axis (19) when seen in a cross-section of the roller (17, 17', 17") along its rotation axis (19) .

3. The bearing according to claim 1 or 2, wherein each roller (17, 17', 17") has a geometry comprising:
a first end face (25, 25') and a second end face (27, 27'), and
a shell surface (28, 28') connecting the first and second end faces (25, 25', 27, 27') and being configured for running along the running surfaces (20, 21) of the inner and outer races (16, 16', 15, 15'), and wherein
the first side (23) is the first end face (25, 25'), and
the second side (24) is the second end face (27, 27'), the shell surface (28, 28') and/or an edge (26) between the second end face (27, 27') and the shell surface (28, 28').

4. The bearing according to one of claims 1 - 3, wherein the at least one through-hole (18, 18', 18") comprises two or more through-holes (18, 18', 18") arranged symmetrically with respect to the rotation axis (19) of the roller (17, 17', 17") .

5. The bearing according to claim 4, wherein the two or more through-holes (18, 18', 18") start at a common opening (30) on the first side (23) of the roller (17, 17', 17").

6. The bearing according to claim 4 or 5, wherein the two or more through-holes (18, 18', 18") comprise an even number of through-holes (18, 18', 18"), and wherein each of two through-holes (18, 18', 18") of the even number of through-holes are arranged in a V-shape (34) when seen in a cross-section of the at least one roller (17, 17', 17") along its rotation axis (19).

7. The bearing according to one of claims 1 - 6, wherein the at least one through-hole (18, 18', 18") ends at the running surface (20, 21) of the inner race (16, 16') and/or of the outer race (15, 15').

8. The bearing according to one of claims 3 - 7, wherein:
the inner and/or outer race (16, 16', 15, 15') comprises a recess (22) having the running surface (20),
the rollers (17, 17', 17") are partially accommodated in the recess (22) such that each roller (17, 17', 17") runs with its shell surface (28, 28') and partially with its first end face (25, 25') and/or second end face (27, 27') within the recess (22) along the running surface (20, 21) of the inner and/or outer race (16, 16', 15, 15').

9. The bearing according to claim 8, wherein the recess (22) of the inner race (16, 16') comprises a circumferential indentation (32) in fluid connection with the at least one through-hole (18, 18', 18") for receiving the lubricant (31).

10. The bearing according to one of claims 1 - 9, wherein a diameter (D1) of the at least one through-hole (18, 18', 18") is smaller than half of the diameter (D2, D3) of the roller (17, 17', 17"), preferably smaller than a quarter of the diameter (D2, D3) of the roller (17, 17', 17"), even more preferably smaller than a tenth of the diameter (D2, D3) of the roller (17, 17', 17").

11. The bearing according to one of claims 1 - 10, wherein the roller (17') is a tapered roller.

12. The bearing according to one of claims 1 - 11, wherein the roller (17, 17") is a cylindrical or toroidal roller.

13. The bearing according to one of claims 1 - 12, comprising at least two rows of rollers (17, 17', 17").

14. The bearing according to one of claims 1 - 13, wherein the lubricant (31) comprises grease and/or oil.

15. A wind turbine (1), comprising at least one bearing according to one of claims 1 - 14.
